Europäisches Patentamt

European Patent Office

Office européen des brevets

(11) Publication number: 0 230 678
A1

## EUROPEAN PATENT APPLICATION

(21) Application number: 86200116.1

(51) Int. Cl.⁴: A61C 8/00

(22) Date of filing: 29.01.86

(43) Date of publication of application:
05.08.87 Bulletin 87/32

(84) Designated Contracting States:
AT BE CH DE FR GB IT LI LU NL SE

(71) Applicant: Barcali, Massimiliano
Via Dei Pensieri 14
I-57100 Livorno(IT)
Applicant: Mencucci, Fabio
Via Tiro A Volo, 17
Marina di Carrara(IT)

(72) Inventor: Barcali, Massimiliano
Via Dei Pensieri 14
I-57100 Livorno(IT)
Inventor: Mencucci, Fabio
Via Tiro A Volo, 17
Marina di Carrara(IT)

(54) Endosteal screw-implant.

(57) The endosteal screw has a thread (A), which is cylindrically shaped and rounded on its external edges . The screw -head (B) is hexagonally spherically shaped to allow easy insertion of the screw into the jaw bone. The hood (C) presents a threaded aperture for the conical headed fixing screw (D) for prosthesis attachment .

FIG.1

FIG.2

Our invention is intended for use in dentistry. The current techniques used in implantology consists of using spiral screw implants imbendded hard into the jaw bone.

The screws used in the above mentioned implants, have similar characteristics to those of wood screws, with spiral cutters and a biting conical stem. The new endosteal screw implants instead, has the following characteristics: a cylindrical shaped thread rounded on its external edges and a spherically shaped head with an adjustable hood.

The device can be described as "A new endosteal screw implant made of a biologically acceptable alloy".

The new endosteal screw has the following characteristics which can be seen in Fig. 1, Fig. 2, and Fig. 3 of the enclosed drawing. Fig. 1 shows the screw and its hood, and Letter A, shows the cylindrical thread with its rounded edges, which is imbedded into the jaw bone.

Fig. 2 shows the hood -marked with C -complete with the screw (Letter D) for bridge fixing, forming the housing to the hexagonally shaped spherical head (Letter B), which allows the hood to be adjusted into the artificial tooth.

Fig. 3 shows cross section A-A seen by O in Fig. 2, looking down onto the hexagonal head -marked E -and onto its edges -marked F -which allows the hood to be adjusted and soldered in the mouth after fixing.

The socket aperture is prepared by the screw tap, allowing the cylindrical stemmed screw with its rounded threads, to be inserted without pressure or tissue trauma. The friction produced is sufficient to hold the screw immobile long enough to allow fiberplasts to deposit on the metal. This allows the peri-implant connective tissue to grow without any side-effects as found in existing, well-established endosteal implants. We have redesigned the existing screw endosteal implants, following up the risults of our research carried out on implants made with existing screws. In such cases, the pressure on the bone has caused the implant to become detached. The little spherically shaped screw head reacts favourably to post operative chewing without disturbance to the stem and the immediate tissue. This hexagonally shaped spherical head allows a tubolar spanner to tighten the screw and for electricity to be discharged along the heads edges, while the head is being soldered to the hood.

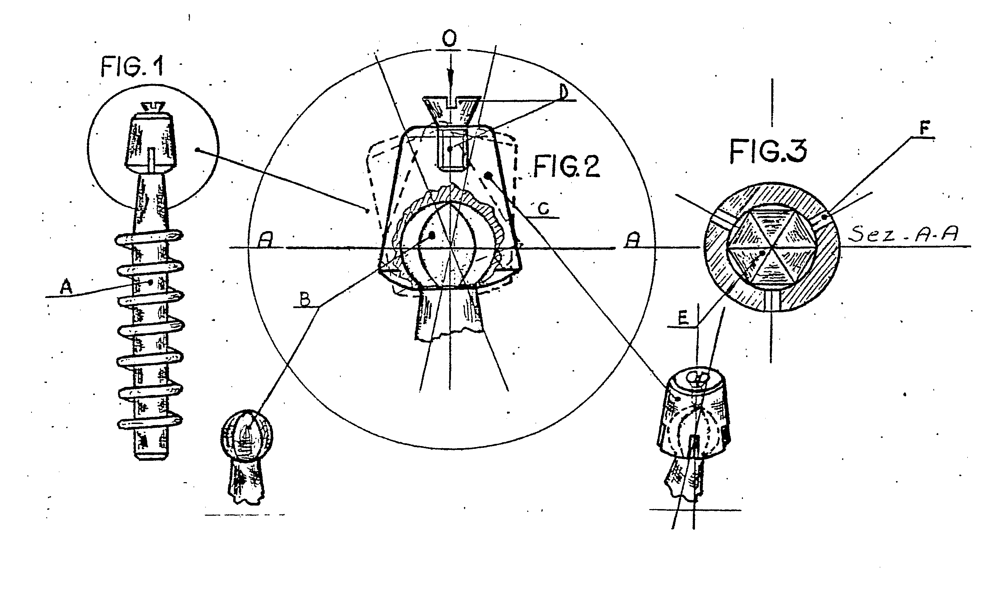

This special form of electrical soldering is performed in the mouth after the screw implant has been imbendded into the bone. In fact, this new screw allows the dentist to position the implant in the best site in the socket bone, without worrying about parallelism as found in existing well-established prosthesis. On the other hand, the dental technician needn't worry about the screws' position because the hoods are perfectly adjustable and can be soldered in parallel. The fixing screw, as in Fig. 2 Letter D, allows the dentist to remove the prosthesis very easily if required.

## Claims

1) This "New endosteal screw implant made of a biologically acceptable alloy" has a cylindrically shaped thread rounded on its external edges, this thread being imbendded into the jaw bone. Therefore, this form avoids pressure on the bone and detachment from the screw, thus avoiding side-effects to peri-implant tissue.

2) This screw implant, as described in Rivendication 1, has a very little spherically shaped head which reacts favourably to post-operative chewing without disturbance to the stem and the immediate tissue.

3) This screw implant, as described in Rivendication 1 and 2, has a hexagonally shaped spherical head which allows a tubolar spanner to tighten the screw, and for the artificial tooth to be soldered to the adjustable hood, in the mouth.

4) This screw implant, as described in Rivendication 1, 2 and 3, has a six-edged head which allows the hood to be adjusted and soldered to it, and a conical headed fixing screw, which is attached to the prosthesis.

FIG.1

FIG.2

FIG.3

O

D

C

A A

A

B

E

F

Sez. A·A

0 230 678

European Patent
Office

**EUROPEAN SEARCH REPORT**

EP  86 20 0116

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | AT-B- 257 826 (BERTOLINI)<br>* page 2, lines 8-12; figures 1, 2 * | 1 | A 61 C 8/00 |
| X | DE-A-1 491 003 (FRITZ)<br>* page 4, line 17 - page 5, line 5; figures 1, 2 * | 1 | |
| A | BE-A- 560 269 (DE GRADY et al.)<br>* page 1, lines 17-19; figures * | 1 | |
| A | DE-B-2 114 323 (AGA)<br>* column 4, line 39 - column 5, line 17; column 6, lines 37-40; figures 1, 2 * | ·2,4 | |
| A | FR-A-1 420 594 (GUIBOUST)<br>* page 1, right-hand column, lines 24-28 * | 3 | **TECHNICAL FIELDS SEARCHED (Int. Cl.4)**<br><br>A 61 C 8/00 |
| A | DE-C- 664 132 (RAKOS)<br>* page 1, lines 1-10 * | 3 | |

-----

The present search report has been drawn up for all claims

| Place of search | Date of completion of the search | Examiner |
|---|---|---|
| BERLIN | 09-01-1987 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82